# EUROPEAN PATENT APPLICATION

(11) **EP 4 553 937 A2**
(43) Date of publication of application: **14.05.2025**
(21) Application number: 23912962.0
(22) Date of filing: 28.12.2023
(51) Int. Cl.: H01M 10/04, H01M 10/42

(54) **ELECTRODE ASSEMBLY AND BATTERY COMPRISING ELECTRODE ASSEMBLY, AND BATTERY PACK AND VEHICLE COMPRISING BATTERY**

(30) Priority: 28.12.2022 KR 20220187593; 27.12.2023 KR 20230193316
(71) Applicant: LG Energy Solution, Ltd., Seoul 07335 (KR)
(72) Inventor: MIN, Byung-Seok, Daejeon 34122 (KR)
(74) Representative: Goddar, Heinz J.
(86) International application number: PCT/KR2023/021794
(87) International publication number: WO 2024/144288

(57) **Abstract**

An electrode assembly according to an embodiment of the present disclosure may have a structure in which a stack, in which a first electrode, a first separator, a second electrode, and a second separator are sequentially stacked, is wound, and the electrode assembly may include a support portion provided on the inner wall of a central winding hole formed in a core of the electrode assembly by winding the stack so as to increase the rigidity of the inner wall.

## Description

### TECHNICAL FIELD

The present disclosure relates to an electrode assembly, a battery including the same, and a battery pack and a vehicle including such a battery.

The present application claims priority to Korean Patent Application No. 10-2022-0187593 filed on December 28, 2022 and Korean Patent Application No. 10-2023-0193316 filed on December 27, 2023 in the Republic of Korea, the disclosures of which are incorporated herein by reference.

### BACKGROUND ART

Batteries, which are easy to apply depending on the product groups and have electrical features such as high energy density and the like, are generally used in electric vehicles (EVs) or hybrid electric vehicles (HEVs) that are driven by an electrical drive source, as well as in portable devices.

These batteries are attracting attention as a new energy source for improving ecofriendliness and energy efficiency because of the primary advantage of dramatically reducing the use of fossil fuels and another advantage of not generating by-products resulting from energy use.

Current batteries widely used include lithium-ion batteries, lithium-polymer batteries, nickel-cadmium batteries, nickel-hydrogen batteries, nickel-zinc batteries, and the like. The operating voltage of this unit battery cell is approximately 2.5V to 4.5V. Therefore, when an output voltage higher than this is required, a battery pack may be configured by connecting a plurality of battery cells in series. In addition, a battery pack may be configured by connecting multiple battery cells in parallel depending on the charge/discharge capacity required for the battery pack. Accordingly, the number of battery cells included in the battery pack and electric connection types thereof may be set in various ways depending on the required output voltage or charge/discharge capacity.

Meanwhile, a cylindrical battery may have a structure in which a jelly roll-type electrode assembly obtained by winding a stack, in which a negative electrode (positive electrode), a separator, a positive electrode (negative electrode), and a separator are stacked in sequence, is accommodated in a roughly cylindrical battery housing.

The jelly roll-type electrode assembly applied to the cylindrical batteries may have a central winding hole formed in the core as it is wound. As the battery is repeatedly charged and discharged, the electrodes constituting the electrode assembly may repeat expansion and contraction.

Repetition of expansion and contraction of the electrode described above may cause a core collapse phenomenon in which the electrode is partially bent from the inner wall of the central winding hole of the electrode assembly and protrudes toward the central winding hole. This core collapse phenomenon may increase the risk of short circuits occurring in the core of the electrode assembly and make it difficult to ensure safety in the use of secondary batteries.

Therefore, a method is required to suppress deformation of the core structure of the electrode assembly due to expansion and contraction of the electrode, which occurs as the battery is repeatedly charged and discharged.

### DISCLOSURE

### Technical Problem

The present disclosure has been designed to solve the problems of the related art, and therefore the present disclosure is directed to providing an electrode assembly having a structure capable of suppressing deformation of the core structure of the electrode assembly due to expansion and contraction of the electrodes caused by repetition of charging and discharging of the battery.

However, the technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided an electrode assembly having a structure in which a stack, in which a first electrode, a first separator, a second electrode, and a second separator are sequentially stacked, is wound, wherein the electrode assembly may include a support portion provided on the inner wall of a central winding hole formed in a core of the electrode assembly by winding the stack so as to increase the rigidity of the inner wall.

The first separator may be located on the inner circumferential surface of the central winding hole.

The support portion may include a coating layer formed on at least one of the first separator and the second separator.

The coating layer may include a UV curing agent.

The coating layer may be formed on the inner surface of the first separator.

The support portion may extend at least a length corresponding to the circumference of the central winding hole.

The core of the electrode assembly may include a separator area where the first electrode and the second electrode are not interposed between the first separator and the second separator and where the first separator and the second separator are wound at least one turn while being in direct contact with each other.

The coating layer may be formed within the separator area.

The support portion may be configured in a predetermined pattern.

The support portion may be configured in a stripe pattern.

Respective stripes constituting the stripe pattern may extend along a direction at an angle of more than 0 degrees and less than 90 degrees with the circumferential direction of the central winding hole.

According to another aspect of the present disclosure, there is provided a battery including: the electrode assembly according to an embodiment of the present disclosure; and a battery housing configured to accommodate the electrode assembly.

According to another aspect of the present disclosure, there is provided a battery pack including: the battery according to an embodiment of the present disclosure; and a pack housing configured to accommodate the battery.

According to another aspect of the present disclosure, there is provided a vehicle including the battery pack according to an embodiment of the present disclosure.

### Advantageous Effects

According to one aspect of the present disclosure, it is possible to suppress deformation of the core structure of the electrode assembly due to expansion and contraction of the electrode caused by repetition of charging and discharging of the battery.

However, the effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a perspective view illustrating an electrode assembly according to an embodiment of the present disclosure.
FIG. 2 is a plan view illustrating an electrode assembly according to an embodiment of the present disclosure.
FIG. 3 is a diagram illustrating a process of winding a stack constituting an electrode assembly according to an embodiment of the present disclosure.
FIG. 4 is an enlarged view illustrating an area including a core of an electrode assembly according to an embodiment of the present disclosure (from which a support portion of the present disclosure is omitted).
FIG. 5 is a diagram illustrating a core collapse phenomenon that occurs as a battery including the electrode assembly shown in FIG. 4 repeats charging and discharging.
FIG. 6 is a diagram illustrating a structure in which a support portion is provided in a stripe pattern on a portion of the electrode (first electrode or second electrode) of the present disclosure.
FIG. 7 is a diagram illustrating a battery according to an embodiment of the present disclosure.
FIG. 8 is a diagram illustrating a battery pack according to an embodiment of the present disclosure.
FIG. 9 is a diagram illustrating a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

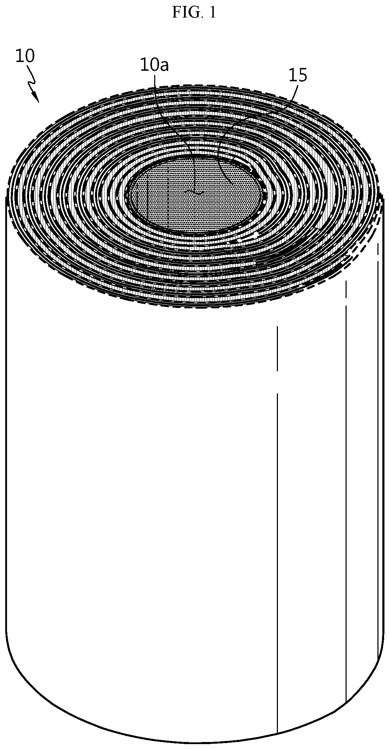

First, an electrode assembly 10 according to an embodiment of the present disclosure will be described with reference to FIGS. 1 to 5.

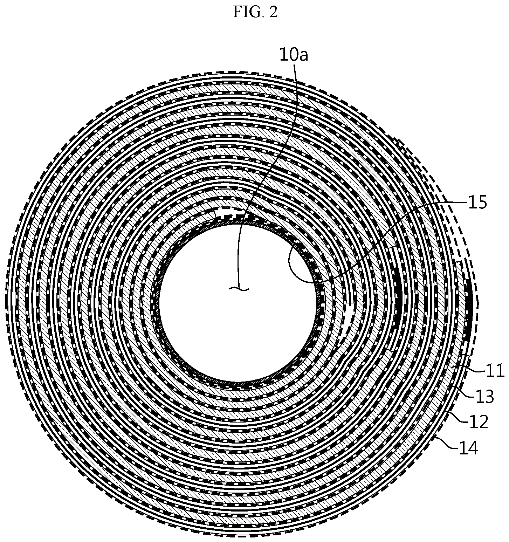

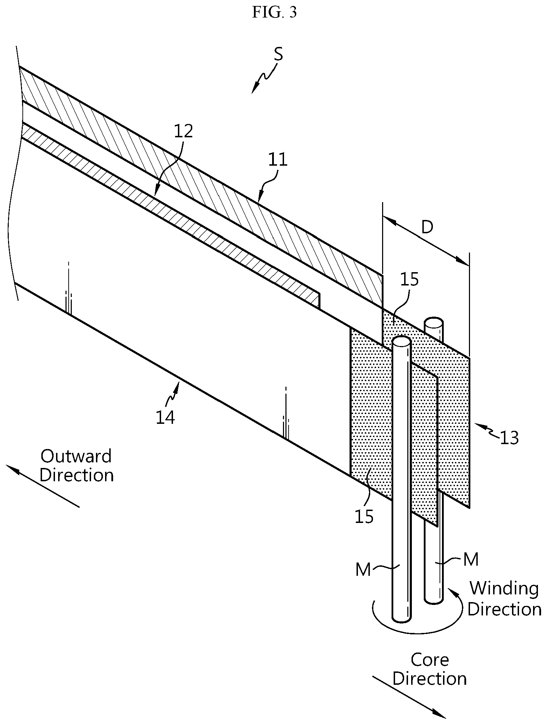

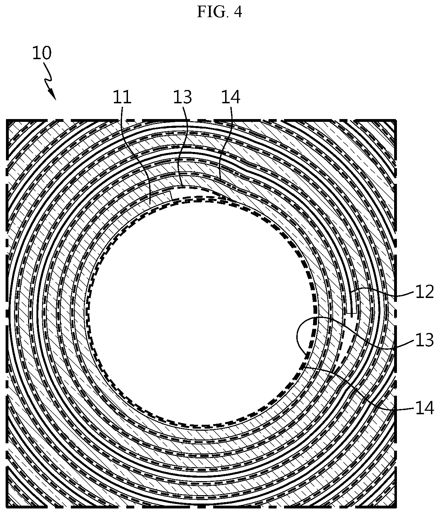

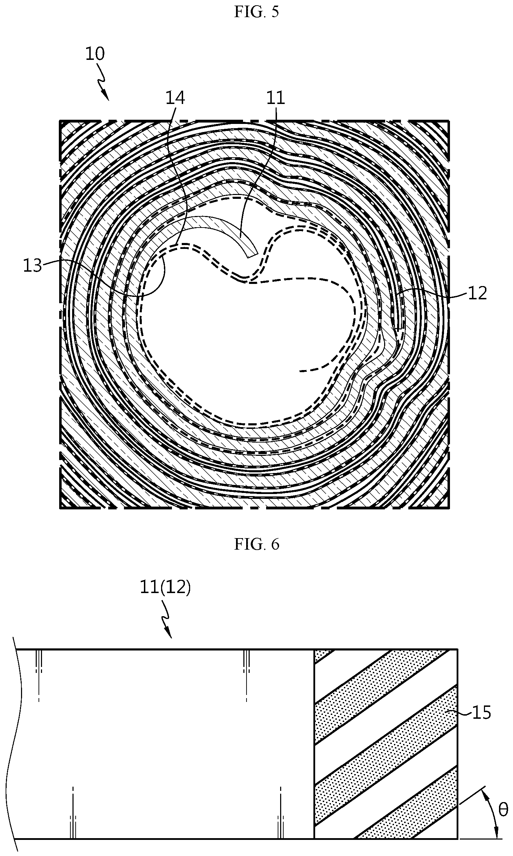

FIG. 1 is a perspective view illustrating an electrode assembly according to an embodiment of the present disclosure, FIG. 2 is a plan view illustrating an electrode assembly according to an embodiment of the present disclosure, FIG. 3 is a diagram illustrating a process of winding a stack constituting an electrode assembly according to an embodiment of the present disclosure, FIG. 4 is an enlarged view illustrating an area including a core of an electrode assembly according to an embodiment of the present disclosure (from which a support portion of the present disclosure is omitted), and FIG. 5 is a diagram illustrating a core collapse phenomenon that occurs as a battery including the electrode assembly shown in FIG. 4 repeats charging and discharging.

First, referring to FIGS. 1 to 4, the electrode assembly 10 according to an embodiment of the present disclosure may include a first electrode 11, a second electrode 12, a first separator 13, and a second separator 14, and a support portion 15. The electrode assembly 10 may be, for example, a jelly roll-type electrode assembly. The electrode assembly 10 may have a structure obtained by winding a stack S, in which the first electrode 11, the first separator 13, the second electrode 12, and the second separator 14 are sequentially stacked, in one direction.

The first electrode 11 may be a positive electrode or a negative electrode. For example, the first electrode 11 may have a structure in which a first electrode active material is coated on one or both sides of a thin metal foil. The second electrode 12 may be an electrode having a polarity opposite that of the first electrode 11. For example, the second electrode 12 may have a structure in which a second electrode active material is coated on one or both sides of a thin metal foil. Although not specifically shown in the drawings of the present disclosure for convenience of illustration, the first electrode 11 may include a first uncoated portion that is not coated with the first electrode active material, and similarly, the second electrode 12 may include a second uncoated portion that is not coated with the second electrode active material. If the first electrode 11 is a negative electrode and if the second electrode 12 is a positive electrode, the area of the first electrode 11 may be greater than the area of the second electrode 12 in the stack S.

The support portion 15 may be provided on the inner wall of a central winding hole 10a formed in the core of the electrode assembly 10 by winding the stack S. The support portion 15 may be configured to increase the rigidity of the inner wall of the central winding hole 10a.

As described above, since the electrode assembly 10 of the present disclosure has a support portion 15 provided on the inner wall of the central winding hole 10a, it is possible to significantly reduce the risk of short circuits due to core collapse in the core of the electrode assembly 10 according to repeated charging and discharging of the battery including the electrode assembly 10.

In general, if the expansion and contraction of the electrodes constituting the electrode assembly 10 is repeated as the battery is repeatedly charged and discharged, as shown in FIG. 5, the end of the first electrode 11 may be bent in the core of the electrode assembly 10 toward the core. This bending of the end of the first electrode 11 may cause damage to the first separator 13 forming the inner wall of the central winding hole 10a, which may increase the risk of occurrence of short circuits in the area adjacent to the core of the electrode assembly 10. Therefore, if a structure capable of improving the rigidity of the core of the electrode assembly 10 is applied, as in the present disclosure, the problem caused by the core collapse may be solved.

The first separator 13 may be located on the inner circumferential surface of the central winding hole 10a. In the stack S, the first separator 13 may be interposed between the first electrode 11 and the second electrode 12. The second separator 14 may be provided on the outermost side of the stack S. The first separator 13 may be located on the inner circumferential surface of the central winding hole 10a when the stack S is wound in one direction. The second separator 14 may be configured to cover the outer circumferential surface of the electrode assembly 10 when the stack S is wound in one direction.

The support portion 15 may include a coating layer formed on at least one of the first separator 13 and the second separator 14. In the case where the support portion 15 is configured to be coated on the first separator 13 and/or the second separator 14, a process is not further required to insert a separate component into the core, thereby improving process efficiency and productivity and having an advantage in energy density.

In the case where the support portion 15 is configured as a coating layer, the coating layer may include a UV curing agent. In this case, the support portion 15 may be configured such that a UV curing agent is coated on the first separator 13 and/or the second separator 14 and then cured by irradiating the UV curing agent with UV ultraviolet rays at a desired time. The curing of the UV curing agent may be performed after or before winding the stack S. The time of the curing process may be determined in consideration of the application thickness and/or application area of the UV curing agent. If the first separator 13 and/or the second separator 14 are easily wound even in the state in which the coating layer is cured, it may be advantageous to perform the curing process before winding the stack S. On the other hand, if it is not easy to wind the first separator 13 and/or the second separator 14 in the state in which the coating layer is cured, and if, for example, the first separator 13 and/or the second separator 14 is expected to be damaged, it may be advantageous to perform the curing process after winding the stack S.

The coating layer may be formed on the inner surface of the first separator 13. In this case, the coating layer may be provided on the inner wall of the central winding hole 10a of the electrode assembly 10. Therefore, curing of the coating layer may be conducted by UV radiation after winding the stack S. That is, the coating layer may be exposed through the central winding hole 10a formed when the stack S is wound, and accordingly, the coating layer may be cured by radiating UV rays into the central winding hole 10a.

However, the formation position of the coating layer of the present disclosure is not limited thereto, and the coating layer may be formed on the inner surface of the first separator 13, the outer surface of the first separator 13, the inner surface of the second separator 14, and/or the outer surface of the second separator 14.

The support portion 15 may extend at least a length corresponding to the circumference of the central winding hole 10a. The support portion 15 may be configured to surround the core of the electrode assembly 10 at least one turn. The support portion 15 may be configured to cover the inner wall surface of the central winding hole 10a of the electrode assembly 10 at least one turn.

When the support portion 15 is provided as described above, the overall rigidity around the core of the electrode assembly 10 may be improved, thereby be preventing or minimizing deformation of the core structure even if the battery is repeatedly charged and discharged. If the deformation of the core structure is suppressed as described above, the occurrence of micro-shorts due to unnecessary electrical contact may be prevented, for example, in the core.

The core of the electrode assembly 10 may include an area where the first electrode 11 and the second electrode 12 are not interposed between the first separator 13 and the second separator 14 and where the first separator 13 and the second separator 14 are wound at least one turn while being in direct contact with each other (hereinafter referred to as a separator area).

Referring to both FIG. 3 and FIG. 4, if the first separator 13 and the second separator 14, extending further outward than the ends of the first electrode 11 and the second electrode 12 in the longitudinal direction, are held and wound using a winding tool M in the direction of the arrow in FIG. 3, there may be an area where only the first separator 13 and the second separator 14 are wound while overlapping each other, excluding the first electrode 11 and the second electrode 12.

In this case, the area where only the first separator 13 and the second separator 14 overlap each other, excluding the first electrode 11 and the second electrode 12, may cover the central winding hole 10a by at least one turn, thereby forming the separator area. The support portion 15 may be provided in at least a portion of the separator area. If the support portion 15 is a coating layer formed on the first separator 13 and/or the second separator 14, the coating layer may be formed within the separator area.

The length D of the area where the support portion 15 is formed may be long enough to cover the core at least one turn. As described above, if the support portion 15 is formed to have a length capable of covering the core at least one turn, the core of the electrode assembly 10 may be effectively strengthened.

Next, a structure in which the support portion 15 is configured in a stripe pattern on the electrodes 11 and 12 of the present disclosure will be described with reference to FIG. 6 and FIGS. 1 to 3.

FIG. 6 is a diagram illustrating a structure in which a support portion is provided in a stripe pattern on a portion of the electrode (first electrode or second electrode) of the present disclosure.

Referring to FIG. 6 and FIGS. 1 to 3, the support portion 15 of the present disclosure may be configured in a predetermined pattern. The support portion 15 may be configured, for example, in a stripe pattern. If the support portion 15 is provided in a predetermined pattern, it is possible to prevent the elasticity of the core of the electrode assembly 10 from being excessively suppressed. As described above, if the support portion 15 is configured in a predetermined pattern to partially secure the elasticity of the first separator 13 and/or the second separator 14, the stress due to expansion and contraction of the electrode assembly 10 may be prevented from excessively accumulating on the core.

In another aspect, if the support portion 15 is configured in a predetermined pattern, it is possible to minimize a reduction in infiltration rate of the electrolyte through the core due to the formation of the support portion 15 for strengthening the core of the electrode assembly 10. The first separator 13 and/or the second separator 14 may be porous. Therefore, the electrolyte may infiltrate into the interior of the electrode assembly 10 through the inner wall of the central winding hole 10a of the electrode assembly 10 covered by the first separator 13 and/or the second separator 14. However, if the support portion 15 is formed on at least one side of the first separator 13 and/or the second separator 14, it may hinder the infiltration of the electrolyte. Therefore, in the case where the support portion 15 is provided in a predetermined pattern on the inner wall of the central winding hole 10a, the effect on the infiltration of the electrolyte may be minimized.

In the case where the support portion 15 is provided in a stripe pattern, the respective stripes constituting the stripe pattern may extend in the circumferential direction of the central winding hole 10a, that is, in a direction at a predetermined angle θ with the winding direction of the electrode assembly 10. The angle θ may be approximately greater than 0 degrees and less than 90 degrees.

In the case where the respective stripes constituting the stripe pattern extend in a direction approximately parallel to the winding direction of the electrode assembly 10, there is no area in which the support portion 15 is omitted in the circumferential direction of the electrode assembly 10, making it difficult to partially secure the elasticity of the first separator 13 and/or the second separator 14. In addition, in the case where the respective stripes constituting the stripe pattern extend in a direction approximately perpendicular to the winding direction of the electrode assembly 10, there may be an area in which the support portion 15 is not partially present in the circumferential direction of the electrode assembly 10, so it may be difficult to effectively strengthen the first separator 13 and/or the second separator 14.

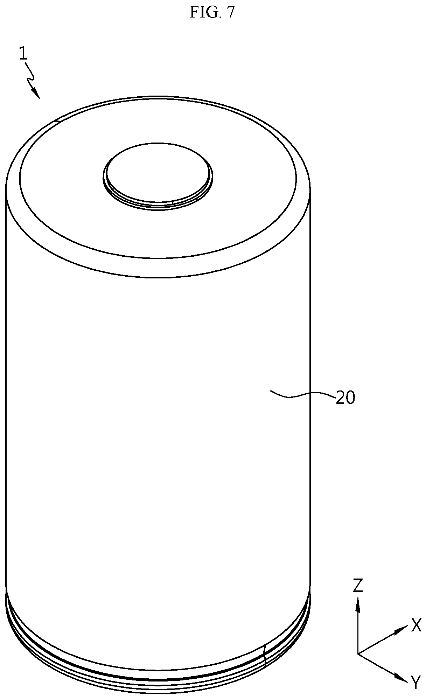

Next, a battery 1 according to an embodiment of the present disclosure will be described with reference to FIG. 1 and FIG. 7.

FIG. 7 is a diagram illustrating a battery according to an embodiment of the present disclosure.

Referring to FIG. 7 together with FIG. 1, a battery 1 according to an embodiment of the present disclosure may include the electrode assembly 10 of the present disclosure and a battery housing 20 configured to accommodate the electrode assembly 10. The battery 1 may be, for example, a cylindrical battery.

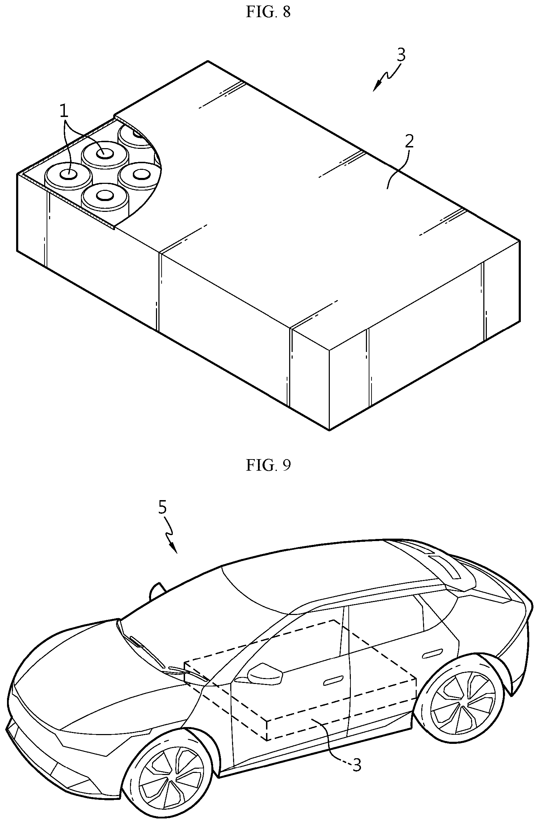

Next, a battery pack 3 according to an embodiment of the present disclosure will be described with reference to FIG. 8.

FIG. 8 is a diagram illustrating a battery pack according to an embodiment of the present disclosure.

Referring to FIG. 8, a battery pack 3 according to an embodiment of the present disclosure may include the battery 1 of the present disclosure. The battery pack 3 may include an assembly of a plurality of batteries 1 electrically connected to each other and a pack housing 2 that accommodates the same. For convenience of illustration, components such as a bus-bar for electrical connection of the batteries 1, a cooling unit, external terminals, and the like are omitted from the drawing.

Next, a vehicle 5 according to an embodiment of the present disclosure will be described with reference to FIG. 9.

FIG. 9 is a diagram illustrating a vehicle according to an embodiment of the present disclosure.

Referring to FIG. 9, the vehicle 5 may include the battery pack 3 of the present disclosure. The battery pack 3 may be mounted to the vehicle 5. The vehicle 5 of the present disclosure may be, for example, an electric vehicle, a hybrid vehicle, or a plug-in hybrid vehicle. The vehicle may include a four-wheeled vehicle or a two-wheeled vehicle. The vehicle 5 may be configured to drive by receiving power from the battery pack 3 according to an embodiment of the present disclosure.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

### [Descriptions of Reference Numerals]

10: Electrode assembly
S: Stack
11: First electrode
12: Second electrode
13: First separator
14: Second separator
15: Support portion
M: Winding tool
20: Battery housing
1: Battery
2: Pack housing
3: Battery pack
5: Vehicle

## Claims

1. An electrode assembly having a structure in which a stack, in which a first electrode, a first separator, a second electrode, and a second separator are sequentially stacked, is wound, the electrode assembly comprising
a support portion provided on the inner wall of a central winding hole formed in a core of the electrode assembly by winding the stack so as to increase the rigidity of the inner wall.

2. The electrode assembly according to claim 1,
wherein the first separator is located on the inner circumferential surface of the central winding hole.

3. The electrode assembly according to claim 2,
wherein the support portion comprises
a coating layer formed on at least one of the first separator and the second separator.

4. The electrode assembly according to claim 3,
wherein the coating layer comprises
a UV curing agent.

5. The electrode assembly according to claim 4,
wherein the coating layer is
formed on the inner surface of the first separator.

6. The electrode assembly according to claim 1,
wherein the support portion
extends at least a length corresponding to the circumference of the central winding hole.

7. The electrode assembly according to claim 3,
wherein the core of the electrode assembly comprises
a separator area where the first electrode and the second electrode are not interposed between the first separator and the second separator and where the first separator and the second separator are wound at least one turn while being in direct contact with each other.

8. The electrode assembly according to claim 7,
wherein the coating layer is
formed within the separator area.

9. The electrode assembly according to claim 1,
wherein the support portion is
configured in a predetermined pattern.

10. The electrode assembly according to claim 9,
wherein the support portion is
configured in a stripe pattern.

11. The electrode assembly according to claim 10,
wherein respective stripes constituting the stripe pattern
extend along a direction at an angle of more than 0 degrees and less than 90 degrees with the circumferential direction of the central winding hole.

12. A battery comprising:
the electrode assembly according to any one of claims 1 to 11; and
a battery housing configured to accommodate the electrode assembly.

13. A battery pack comprising:
the battery according to claim 12; and
a pack housing configured to accommodate the battery.

14. A vehicle comprising the battery pack according to claim 13.
